# NEUE EUROPÄISCHE PATENTSCHRIFT

(11) **EP 1 695 013 B2**
(45) Veröffentlichungstag und Bekanntmachung des Hinweises auf die Entscheidung über den Einspruch: **18.06.2014**
(45) Hinweis auf die Patenterteilung: 25.08.2010
(21) Anmeldenummer: 04803967.1
(22) Anmeldetag: 16.12.2004
(51) Int. Cl.: F27B 7/34, C04B 7/44, B01J 6/00, C04B 2/10

(54) **VERFAHREN ZUM BRENNEN VON KALKSTEIN**
LIMESTONE CALCINATION METHOD
PROCEDE POUR CALCINER DU CALCAIRE

(30) Priorität: 16.12.2003 DE 10359362
(43) Veröffentlichungstag der Anmeldung: 30.08.2006
(73) Patentinhaber: Rheinkalk GmbH, 42489 Wülfrath (DE)
(72) Erfinder: KLINGBEIL, Lothar, 51109 Köln (DE); TOISOUL, Stéphane, B-5300 Landenne (BE)
(74) Vertreter: Cohausz & Florack
(86) Internationale Anmeldenummer: PCT/EP2004/014354
(87) Internationale Veröffentlichungsnummer: WO 2005/059461

(56) Entgegenhaltungen:
- EP-A1- 0 560 715
- EP-A1- 0 603 998
- DE-A1- 4 001 378
- DE-A1- 19 800 249
- DE-C- 735 351
- FR-A- 1 296 088
- FR-A1- 2 521 548
- GB-A- 1 458 386
- JP-A- H01 266 407
- US-A- 827 517
- US-A- 2 555 289
- US-A- 2 647 739
- US-A- 3 722 867
- US-A- 3 954 382
- US-A- 4 162 890
- US-A- 4 496 313
- US-A- 5 658 141
- US-A- 5 980 243
- ALEXANDER SAUBERER: 'Experimentelle Studien zum Coanda-Effekt', 1998, WIEN

## Beschreibung

Die Erfindung betrifft ein Verfahren zum Brennen von Kalkstein in einem Drehrohrofen mit mindestens einem eine Brennerdüse aufweisenden Brenner, welcher eine aus der Brennerdüse austretende, auf den Kalkstein einwirkende Flamme erzeugt.

Verfahren dieser Art sind seit langem aus dem Stand der Technik bekannt. Dabei wird üblicherweise der Kalkstein (CaCO₃) in einem kontinuierlichen Prozeß durch einen zylindrischen Drehrohrofen gefördert und dabei durch die Flamme eines in der Regel in der Längsachse des zylindrischen Drehrohrofens angeordneten Brenners zu Branntkalk (CaO) gebrannt, wobei in Abhängigkeit von der während des Brennprozesses im Brenngut herrschenden Temperatur zwischen der Produktion von porösem und sehr reaktivem Weichbranntkalk (Temperatur im Brenngut T < 1200°C) und dichterem Hartbranntkalk (T ca. 1400°C) unterschieden wird.

Nach Verlassen des Drehrohrofens über dessen stirnseitigen Auslauf fällt das gebrannte Brenngut auf eine unterhalb des Auslaufs angeordnete Kühlvorrichtung, wo es von einem aufsteigenden Kühlluftstrom durchströmt und dabei abgekühlt wird. Die sich dabei stark erhitzende Kühlluft ihrerseits strömt in den höher liegenden Drehrohrofen und steht dort als sekundäre Verbrennungsluft (Sekundärluft) für den Brennprozeß zur Verfügung.

Der beim Kalkbrennen als Rohmaterial eingesetzte Kalkstein enthält Restanteile an Schwefel, üblicherweise in der Größenordnung von 0,02 bis 0,03 %. Dieser Schwefelanteil führt jedoch zu einer signifikanten Verschlechterung der Produktqualität des Branntkalks insbesondere im Hinblick auf eine spätere Verwendung als Entschwefelungsmittel in der Stahlproduktion.

Im Zuge des Brennprozesses reagiert der im Kalkstein im wesentlichen in gebundener Form als Pyrit (FeS₂) vorliegende Schwefel bei einer Temperatur im Brenngut von 800 bis 1200°C, also bei der in der Weichbranntproduktion vorherrschenden Brenntemperatur, zunächst zu Eisen(III)oxid und Schwefeldioxid gemäß der Reaktionsgleichung:

2 FeS₂ + 5½ O₂ → Fe₂O₃ + 4 SO₂ .

Das Schwefeldioxid-Gas reagiert im folgenden sowohl mit dem Kalkstein als auch mit dem gebrannten Kalk sowie mit der aus der Kühlvorrichtung aufsteigenden erhitzten Sekundärluft zu Calciumsulfat CaSO₄ (Anhydrit):

CaCO₃ + SO₂ + 1½ O₂ → CaSO₄ + CO₂

CaO + SO₂ + ½O₂ → CaSO₄ .

Das kristalline Calciumsulfat seinerseits läßt sich nur bei hohen Kohlenmonoxid-Konzentrationen (> 2000 ppm) wieder aus dem Branntkalk entfernen, indem es zusammen mit Kohlenmonoxid zu Branntkalk, Schwefeldioxid und Kohlendioxid reagiert:

CaSO₄ + CO → CaO + SO₂ + CO₂

Hohe CO-Konzentrationen im Ofen lassen sich dadurch erzeugen, daß dem Brenner die Verbrennungsluft nur unterstöchiometrisch zugeführt wird. Die Bezeichnung "unterstöchiometrisch" charakterisiert dabei eine Betriebssituation, bei der dem Brenner weniger Sauerstoff zugeführt wird, als notwendig wäre, um die Kohlenstoffanteile im Brennstoff vollständig zu CO₂ zu verbrennen. Ein unterstöchiometrischer Brennerbetrieb läßt sich also insbesondere durch eine Drosselung der Verbrennungsluftzufuhr erzeugen.

Hohe CO-Konzentrationen in den Verbrennungsgasen sind jedoch allein schon wegen der hohe Toxizität des CO nachteilig. Zudem stellt das in den Verbrennungsgasen vorhandene CO einen "Energieverlust" dar, da es sich hierbei um nicht vollständig verbrannten Kohlenstoff handelt. So ergeben sich zwei Drittel der nutzbaren Energie bei der Verbrennung von Kohlenstoff zu CO₂ erst in der Reaktion des CO zu CO₂ (CO + ½O₂ → CO₂), so daß das Entweichen von CO über die Abgasleitungen des Ofens einen nicht unerheblichen Effizienzverlust darstellt.

Lediglich oberhalb einer Brenntemperatur von 1200°C, also ausschließlich bei der Hartbranntproduktion, dissoziiert das Calciumsulfat auch in einer CO-freien Atmosphäre zu Branntkalk, Sauerstoff und Schwefeldioxid:

CaSO₄ → CaO + SO₂ + ½O₂

In der EP 0 987 508 A1 ist eine Ofenanlage gemäß dem Oberbegriff beschrieben. Sie umfaßt einen Drehrohrofen mit einer im Ofenkopf angeordneten und in den Ofen hinein ragenden Brennvorrichtung, die ihrerseits aus einer primären und einer sekundären Brenneinheit besteht, wobei die beiden Brenneinheiten übereinander angeordnet und unterschiedlich orientiert sind. Die Flamme der primären Brenneinheit ist stark buschig geformt und breitet sich im wesentlichen mittig im Drehrohrofen aus, um das Brenngut auf Brenntemperatur aufzuheizen. Die aus der sekundären Brenneinheit austretende Flamme dient einerseits dazu, den Brennstoff und die Verbrennungsluft der primären Einheit vorzuheizen, um in dieser eine vollständige Verbrennung des Brennstoffes zu ermöglichen, und andererseits um den Brennprozeß im Brenngut abzuschließen. Zu diesem Zweck ist sie gegenüber der durch die primäre Brenneinheit erzeugten Hauptflamme stark in Richtung des Brenngutes abgewinkelt.

Durch die vorstehend beschrieben Brenneranordnung ist ein verlustarmer Wärmeeintrag in das Brenngut und damit ein effizienter Brennprozeß erreichbar. Allerdings begünstigt die Anordnung eine vollständige Umsetzung des in der Ofenatmosphäre enthaltenen Schwefeldioxids zu Calciumsulfat durch Reaktion mit dem Brenngut und der in den Ofen eindringenden Sekundärluft, so daß der produzierte Branntkalk nicht optimale Entschwefelungseigenschaften aufweist.

Der Erfindung liegt somit die Aufgabe zugrunde, ein Verfahren zum Brennen von Kalkstein zu anzugeben, bei dem die Erzeugung von Calciumsulfat im Zuge des Brennprozesses mit geringem technischen Aufwand insbesondere bei der Produktion von Weichbranntkalk von vornherein wirksam vermieden werden kann.

Die Aufgabe wird erfindungsgemäß mit einem Verfahren gemäß dem Anspruch 1 dadurch gelöst, dass der Querschnitt der Brennerdüse derart geformt ist, dass die erzeugte Flamme flach ausgebildet ist, und die Lage der Brennerdüse relativ zum Brenngut derart gewählt wird, dass sich bei Kontakt der Flamme mit der Oberfläche des Brenngutes ein Coanda-Effekt einstellt, wodurch dort eine sauerstoffarme Atmosphäre erzeugt wird, so dass die Reaktion des Brenngutes mit Schwefeldioxid und Sauerstoff zu Calciumsulfat nahezu vollständig unterdrücht wird.

Der sich beim Kontakt der Flamme des Brenners mit der Brenngutoberfläche einstellende Coanda-Effekt ist insbesondere aus der Luftfahrttechnik bekannt. Er beschreibt die Tendenz von Gasen und Flüssigkeiten bzw. allgemein von Fluiden aufgrund ihrer Viskosität an Oberflächen, mit denen sie in Kontakt kommen, anzuhaften und sogar einer gekrümmten Kontur dieser Oberflächen zu folgen, ohne von ihr abzureißen. Ausgenutzt wird der Coanda-Effekt vornehmlich für aero- und hydrodynamische Anwendungen. Alltäglich erfahrbar ist der Coanda-Effekt beispielsweise bei der Beobachtung des Verhaltens einer Kerzenflamme, wenn ein fester Gegenstand teilweise in die Flamme hineingehalten wird. Dabei legt sich die Flamme an dessen Oberfläche a, unabhängig ob dessen Kontur eben oder gekrümmt ist. Zudem verlängert sich Flamme erheblich.

Bei dem erfindungsgemäßen Verfahren sind die Lage der Brennerdüse des Brenners und die Flammenform derart gewählt, dass die aus dem Brenner austretende Flamme, unmittelbar nachdem sie mit der Oberfläche des Brenngutes in Kontakt getreten ist, dieses infolge des Coanda-Effektes dicht abdeckt und somit einen Kontakt des Brenngutes mit der aus der Kühlvorrichtung in den Drehrohrofen zurückströmenden Sekundärluft verhindert. Durch die daraus resultierende sauerstoffarme Atmosphäre an der Oberfläche des Brenngutes wird die unerwünschte Reaktion des je nach Fortschritt des Brennprozesses zu unterschiedlichen Anteilen aus Kalkstein und aus Branntkalk bestehenden Brenngutes mit Schwefeldioxid und Sauerstoff zu Calciumsulfat nahezu vollständig unterdrückt. Vielmehr kann das aus dem vormals als Pyrit gebundenem Schwefel entstandene gasförmige Schwefeldioxid aus dem Drehrohrofen entweichen.

Ferner bewirkt der Coanda-Effekt, daß die an der Oberfläche des Brenngutes anhaftende Flamme sich gegenüber einer sich frei im Ofenvolumen ausbreitenden Flamme verlängert und damit eine größere Fläche abdeckt. Dies führt zu einer weiteren Effizienzsteigerung des Brennprozesses. Insbesondere lassen sich dadurch auch kleiner dimensionierte Öfen mit unvermindert hoher Durchsatzleistung realisieren. Eine maximale Länge der sich an der Oberfläche des Brenngutes entlang ausbreitenden Flamme wird dadurch erreicht, daß die Flamme durch eine entsprechende Positionierung der Brennerdüse im wesentlichen parallel zur Oberfläche des Brenngutes aus dem Brenner austritt.

Eine möglichst vollständige Abdeckung der Oberfläche des Brenngutes über seine gesamte Breite im Bereich des Ofenauslaufs, was letztlich Voraussetzung für eine vollständige Unterdrückung der CaSO₄-Erzeugung ist, wird dadurch erreicht, daß der Querschnitt der Brennerdüse derart geformt ist, daß die erzeugte Flamme flach ausgebildet ist. Darüber hinaus begünstigt die flache Flammenform gegenüber beispielsweise einer buschig geformten Flamme einen maximalen Wärmeeintrag in das Brenngut, da im Falle einer flachen, sich in unmittelbarem Kontakt mit dem zu erhitzenden Brenngut befindlichen Flamme der lediglich die Umgebungsatmosphäre aufheizende Anteil der Heizenergie der Flamme minimiert ist.

Um eine möglichst frühzeitige Berührung der Brenngutoberfläche durch die Flamme, wodurch sich der Coanda-Effekt einstellt, zu erreichen, gleichzeitig aber eine Beschädigung des Brenners durch Kontakt mit dem Brenngut auf dessen Oberfläche zu vermeiden, sollte der Brenner relativ zum Brenngut beabstandet positioniert werden. Hierbei erweist sich ein Abstand zwischen der Unterkante der Brennerdüse des Brenners und der Oberfläche des Brenngutes von 30 bis 50 cm bei den üblichen industriell genutzten Ofendimensionen als zweckmäßig.

Nach einer weiteren vorteilhaften Ausgestaltung der Erfindung ist vorgesehen, daß die Flamme durch mehrere, vorzugsweise zwei Brenner erzeugt wird. Durch die Verwendung mehrerer Brenner kann die effektive Breite der Flamme vergrößert und somit eine vollständigere Abdeckung des Brennguts durch die Flamme quer zu dessen Transportrichtung erreicht werden. Im Hinblick auf einen möglichst wirtschaftlichen Betrieb - hierbei sind auch Installations- und Wartungskosten zu berücksichtigen - ist es sinnvoll, die Ofenanlage mit zwei Brennern auszustatten. Gemäß einer weiteren vorteilhaften Ausgestaltung der Erfindung sind die Brennerdüseen der Brenner in einer im wesentlichen parallel zur Oberfläche des Brennguts liegenden Ebene angeordnet. Dabei ist zu beachten, daß im Falle eines Drehrohrofens die Oberfläche des Brenngutes in Abhängigkeit von dessen Massendurchsatz, dessen innerer Reibung, der Beschaffenheit der Ofenwand sowie von der Rotationsgeschwindigkeit einerseits nicht exakt horizontal ausgerichtet, sondern geringfügig geneigt und andererseits nicht vollständig eben ist.

Im folgenden wird die Erfindung anhand einer ein Ausführungsbeispiel darstellenden Zeichnung näher erläutert. Es zeigen:
- Fig. 1: ein Drehrohrofen zum Brennen von Kalkstein ausschnittsweise in schematisierter Seitenansicht,
- Fig. 2: den Drehrohrofen der Fig. 1 in Draufsicht,
- Fig. 3: den Drehrohrofen der Fig. 1 im Querschnitt gemäß der Linie A-A der Fig. 1 und
- Fig. 4: den Drehrohrofen der Fig. 1 im Querschnitt mit modifizierter Brenneranordnung

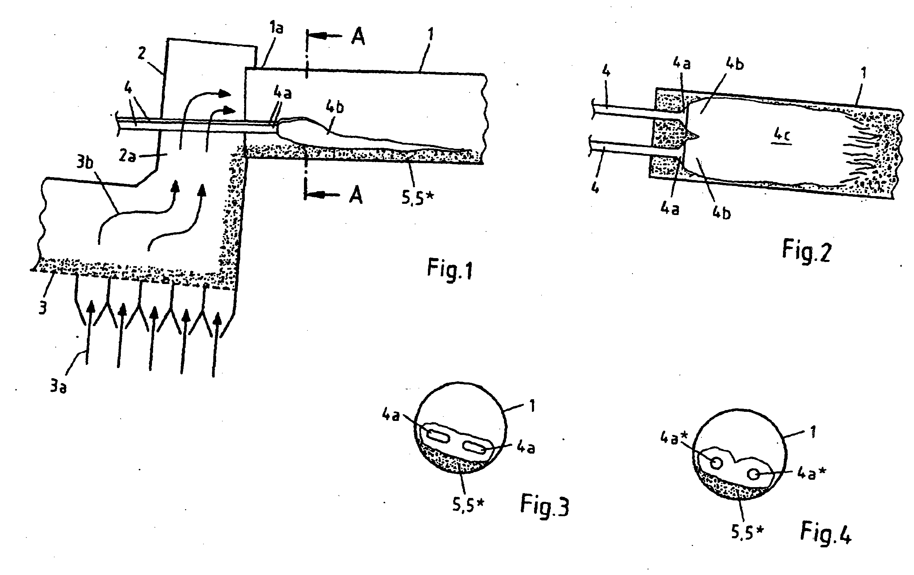

Gemäß Fig. 1 umfaßt der Drehrohrofen 1 einen Einlauf (nicht dargestellt) und einen Auslauf 1a. Der Drehrohrofen 1 ist um seine gegenüber der Horizontalen geringfügig geneigte Längsachse drehbar gelagert und über ein nicht dargestelltes Getriebe mit einem ebenfalls nicht dargestellten Drehantriebsmotor verbunden, wobei der Einlauf des Ofens dabei höher angeordnet ist als der Auslauf 1a. Der Auslauf 1a mündet in einen Ofenkopf 2 mit einem Schachtraum 2a. Der Schachtraum 2a verbindet den Drehrohrofen 1 räumlich mit einer am Fuße des Ofenkopfes 2 angeordneten, üblicherweise als Rostkühler 3 ausgebildeten Kühlvorrichtung. Quer durch den Schachtraum 2a erstrecken sich vorzugsweise zwei parallel ausgerichtete Brenner 4, welche in ihrer Position bezüglich Höhe, Neigung und ihrer Längsstellung einzeln verstellbar sind und an ihrem Ende jeweils eine Brennerdüse 4a aufweisen. Die genaue Positionierung der Brenner, die Form ihrer jeweiligen Brennerdüse 4a sowie die Beschaffenheit der austretenden Flammen wird weiter unten im Detail erläutert. Zusätzlich zu den genannten Brennern 4 kann oberhalb noch ein weiterer, in der Ofenlängsachse angeordneter Brenner vorgesehen sein, was in dem vorliegenden Ausführungsbeispiel jedoch nicht dargestellt ist.

Während des Kalkbrennprozesses wird der zu brennende Kalkstein 5 in gebrochener Form als Brenngut bei Raumtemperatur oder nach Durchlauf einer Vorwärmeinheit (nicht dargestellt) in erhitztem Zustand in den Drehrohrofen 1 über dessen nicht dargestellten Einlauf aufgegeben. Durch die Drehung des Drehrohrofens 1 über den Drehantrieb und die Neigung des Drehrohrofens 1 wird der Kalkstein 5 zum Auslauf 1a des Ofens 1 gefördert. Dabei wird er durch die aus den Brennerdüseen 4a der Brenner 4 austretenden Flammen 4b zu Branntkalk 5* gebrannt. Der Branntkalk 5* tritt nach Verlassen des Drehrohrofens 1 über dessen Auslauf 1a in den Ofenkopf 2 ein und fällt durch dessen Schachtraum 2a auf den Boden des Rostkühlers 3, wo er weiter gefördert und dabei in der im folgenden beschriebenen Weise gekühlt wird.

Unterhalb des Rostkühlers 3 wird durch ein nicht dargestelltes Gebläse ein aufsteigender Kühlluftstrom 3a erzeugt, der durch die Durchlaßöffnungen des Bodens in den Rostkühler 3 eintritt, wo er den heißen Branntkalk 5* durchströmt und diesen dabei abkühlt. Die nach Durchströmen des Branntkalks 5* stark erhitzte Kühlluft 3b steigt im Schachtraum 2a des Ofenkopfes 2 auf und strömt von dort in den Drehrohrofen 1.

Um die Reaktion des in der Sekundärluft enthaltenen Sauerstoffs mit dem durch den Ofen geförderten Kalkstein 5 bzw. dem bereits produzierten Branntkalk 5* sowie dem in der Ofenatmosphäre vorhandenen Schwefeldioxid zu Calciumsulfat zu unterdrücken, sind die Lage der Brennerdüsen 4a relativ zum Brenngut 5, 5* und die Flammenform derart gewählt, daß sich bei Kontakt der Flamme mit der Oberfläche des Brenngutes 5, 5* ein Coanda-Effekt einstellt, wodurch sich die Flamme dicht an das Brenngut anlegt und dort eine sauerstoffarme Atmosphäre erzeugt.

Hinsichtlich der Flammenform weisen die Brennerdüsen 4a im Querschnitt vorzugsweise die Form eines flachen Rechtecks oder einer flachen Ellipse auf, wie in Fig. 3 dargestellt ist. Die aus den derart ausgebildeten Brennerdüsen 4a austretenden Flammen 4b weisen eine starke Divergenz senkrecht zur Förderrichtung des Brenngutes 5, 5* auf, wie in Fig. 2 erkennbar ist. Dadurch vereinigen sich die Flammen nach einer kurzen Strecke zu einer gemeinsamen flach ausgebildeten und das Brenngut über seine gesamte Breite abdeckenden Flamme 4c, die einerseits den Kalkstein 5 in Branntkalk 5* umwandelt, andererseits jedoch durch die Verdrängung der Sekundärluft eine Erzeugung von Calciumsulfat unterbindet. Die in Fig. 4 dargestellten runden Brennerdüseen 4a* bewirken dagegen eine buschige Flammenform, wobei die einzelnen Flammen bei entsprechender Dimensionierung der Brennerdüsen 4a* sich nach einer im Vergleich zu den flach ausgebildeten Flammen 4b längeren Strecke ebenfalls zu einer gemeinsamen Flamme vereinigen und sich infolge des Coanda-Effekt an die Brenngutoberfläche anlegen und diese abdecken.

Hinsichtlich der Lage der Brennerdüsen 4a relativ zum Brenngut 5, 5* sind die in ihrer Höhe, Neigung und Längsstellung frei einstellbaren Brenner 4 vorzugsweise derart angeordnet, daß die Flammen 4b im wesentlichen parallel zur Oberfläche des Brenngutes 5, 5* aus den Brennerdüsen 4a austreten, so daß eine maximale Flammenreichweite erzielt wird. Weiterhin beträgt der jeweiligeAbstand der Unterkante der Brennerdüse 4a zur Oberfläche des Brenngutes vorzugsweise 30 bis 50 cm. Schließlich sind die Positionen der Brenner 4 derart eingestellt, daß ihre Brennerdüsen 4a in einer im wesentlichen parallel zur Oberfläche des Brenngutes 5, 5* liegenden Ebene angeordnet sind, wobei zu beachten ist, daß die Oberfläche des Brenngutes in Abhängigkeit von dessen Massendurchsatz, dessen innerer Reibung, der Beschaffenheit der Ofenwand sowie von der Rotationsgeschwindigkeit zur Horizontalen geneigt und nicht vollständig eben sein kann, wie in den Fig. 3 und 4 ebenfalls dargestellt ist.

## Patentansprüche

1. Verfahren zur Minimierung der Anhydritproduktion beim Brennen von schwefelhaltigem Kalkstein (5) als Brenngut in einem Drehrohrofen mit mindestens einem eine Brennerdüse (4a) aufweisenden Brenner (4), welcher eine aus der Brennerdüse (4a) austretende, auf den Kalkstein (5) einwirkende Flamme (4b,4b*, 4c) erzeugt,
**dadurch gekennzeichnet, dass**
der Querschnitt der Brennerdüse (4a) derart geformt ist, dass die erzeugte Flamme (4b) flach ausgebildet ist, und die Lage der Brennerdüse (4a) relativ zum Brenngut (5, 5*) derart gewählt wird, dass sich bei Kontakt der Flamme (4b, 4b*, 4c) mit der Oberfläche des Brenngutes (5, 5*) ein Coanda-Effekt einstellt, wodurch dort eine sauerstoffarme Atmosphäre erzeugt wird, so dass die Reaktion des Brenngutes mit Schwefeldioxid und Sauerstoff zu Calciumsulfat nahezu vollständig unterdrückt wird.

2. Verfahren nach Anspruch 1,
**dadurch gekennzeichnet, daß**
die Flamme (4b, 4b*) im wesentlichen parallel zur Oberfläche des Brenngutes (5, 5*) aus der Brennerdüse (4a) austritt.

3. Verfahren nach Anspruch 1 oder 2,
**dadurch gekennzeichnet, daß**
der Abstand zwischen der Unterkante der Brennerdüse (4a) und der Oberfläche des Brenngutes (5,5*) 30 - 50 cm beträgt.

4. Verfahren nach einem der Ansprüche 1 bis 3,
**dadurch gekennzeichnet, daß**
die Flamme (4c) durch mehrere, vorzugsweise zwei Brenner (4) erzeugt wird.

5. Verfahren nach Anspruch 4,
**dadurch gekennzeichnet, daß**
die Brennerdüsen (4a) in einer im wesentlichen parallel zur Oberfläche des Brennguts (5,5*) liegenden Ebene angeordnet sind.

## Claims

1. Method for minimising anhydrite production when burning limestone (5) containing sulphur as combustion material in a rotary kiln, having at least one burner (4) exhibiting a burner nozzle (4a), which produces a flame (4b, 4b*, 4c) emerging from the burner nozzle (4a) and taking effect on the limestone (5),
***characterised in that*** the cross-section of the burner nozzle (4a) is shaped in such a way that the flame (4b) produced is flat in shape, and the position of the burner nozzle (4a) relative to the combustion material (5, 5*) is selected in such a way that on contact of the flame (4b, 4b*, 4c) with the surface of the combustion material (5, 5*) a Coanda effect is produced, as a result of which a low-oxygen atmosphere is created there, such that the reaction of the combustion material with sulphur dioxide and oxygen to form calcium sulphate is almost entirely suppressed.

2. Method according to Claim 1,
***characterised in that*** the flame (4b, 4b*) emerges from the burner nozzle (4a) essentially parallel to the surface of the combustion material (5, 5*).

3. Method according to Claim 1 or 2,
***characterised in that*** the distance between the lower edge of the burner nozzle (4a) and the surface of the combustion material (5, 5*) amounts to 30 - 50 cm.

4. Method according to any one of Claims 1 to 3,
***characterised in that*** the flame (4c) is produced by a plurality of burners (4), preferably two.

5. Method according to Claim 4,
***characterised in that*** the burner nozzles (4a) are arranged in a plane lying essentially parallel to the surface of the combustion material (5, 5*).

## Revendications

1. Procédé pour minimiser la production d'anhydrite lors de la calcination de calcaire (5) contenant du soufre, en tant que matériau à calciner, dans un four tubulaire tournant, avec au moins un brûleur (4), qui est doté d'une buse de brûleur (4a) qui génère une flamme (4b, 4b*, 4c), qui, sortant de la buse de brûleur (4a), agit sur le calcaire (5),
***caractérisé en ce que*** la section transversale de la buse de brûleur (4a) est formée de telle manière que la flamme (4b) générée soit de conception plane et que la position de la buse de brûleur (4a) par rapport au matériau à calciner (5, 5*) soit sélectionnée de sorte que, lors de l'entrée en contact de la flamme (4b, 4b*, 4c) avec la surface du matériau à calciner (5, 5*), ait lieu un effet Coanda, qui génère une atmosphère pauvre en oxygène, de sorte que la réaction du produit à calciner en présence de dioxyde de soufre et d'oxygène conduisant à la formation de sulfate de calcium soit presque complètement supprimée.

2. Procédé selon la revendication 1,
***caractérisé en ce que*** la flamme (4b, 4b*) sort de la buse de brûleur (4a) sensiblement parallèlement à la surface du matériau à calciner (5, 5*).

3. Procédé selon l'une des revendications 1 ou 2,
***caractérisé en ce que*** la distance entre le bord inférieur de la buse de brûleur (4a) et la surface du produit à calciner (5, 5*) est de 30 à 50 cm.

4. Procédé selon l'une des revendications 1 à 3,
***caractérisé en ce que*** la flamme (4c) est générée par plusieurs, de préférence par deux brûleurs (4).

5. Procédé selon la revendication 4,
***caractérisé en ce que*** les buses de brûleur (4a) sont disposées sur un plan sensiblement parallèle à la surface du produit à calciner (5, 5*).
